Europäisches Patentamt

European Patent Office

Office européen des brevets

(11) Numéro de publication: **0 287 444 B1**

# FASCICULE DE BREVET EUROPEEN

(45) Date de publication de fascicule du brevet: **17.06.92**  (51) Int. Cl.⁵: **H01Q 3/26**, G02F 2/00

(21) Numéro de dépôt: **88400856.6**

(22) Date de dépôt: **08.04.88**

(54) **Dispositif de commande optique d'une antenne à balayage.**

(30) Priorité: **14.04.87 FR 8705267**

(43) Date de publication de la demande:
**19.10.88 Bulletin 88/42**

(45) Mention de la délivrance du brevet:
**17.06.92 Bulletin 92/25**

(84) Etats contractants désignés:
**DE GB IT NL SE**

(56) Documents cités:
**US-A- 3 878 520**
**US-A- 4 238 797**

**JOURNAL OF LIGHTWAVE TECHNOLOGY,**
**vol. LT-3, no. 5, octobre 1985, pages 992-998,**
**New York, US; R.A. SOREF:**
**"Voltage-controlled optical/RF phase shifter"**

**RADAR-82, INTERNATIONAL CONFERENCE,**
**18-20 octobre 1982, pages 408-412, Londres,**
**GB; J.R. FORREST et al.: "Optical fibre net-**
**works for signal distribution and control in**
**phased array radars"**

**JOURNAL OF OPTICS, vol. 15, no. 6,**
**novembre/décembre 1984, pages 403-407,**
**Paris, FR; J.P. GOEDGEBUER et al.: "Nouvelle**
**technique de modulation électro-optique**
**adaptée aux sources à spectre large"**

(73) Titulaire: **THOMSON-CSF**
**51, Esplanade du Général de Gaulle**
**F-92800 Puteaux(FR)**

(72) Inventeur: **Huignard, Jean-Pierre**
**THOMSON-CSF SCPI 19, avenue de Messine**
**F-75008 Paris(FR)**
Inventeur: **Puech, Claude**
**THOMSON-CSF SCPI 19, avenue de Messine**
**F-75008 Paris(FR)**

(74) Mandataire: **Grynwald, Albert et al**
**THOMSON-CSF SCPI**
**F-92045 PARIS LA DEFENSE CEDEX 67(FR)**

## Description

L'invention concerne un dispositif de commande optique d'une antenne à balayage et plus particulièrement un dispositif permettant de contrôler par ses moyens optiques le diagramme de rayonnement d'une antenne radar émettant par exemple dans la bande de fréquence 1 - 12 GHz. Le dispositif proposé assure en particulier la fonction de balayage angulaire du faisceau radar à partir du contrôle de la phase de chaque élément de l'antenne.

L'invention est applicable aux antennes à balayage électronique dont chaque élément rayonnant est commandé électroniquement indépendamment de façon à obtenir un balayage pour l'antenne. Le balayage électronique permet de modifier la position du faisceau de balayage. Le balayage du faisceau doit être effectué rapidement comparé au temps de répétition du radar. Pour obtenir ce balayage rapide la commande électronique, selon un procédé connu dans la technique, consiste à agir sur les phases respectives des commandes des divers éléments rayonnants. Il convient donc d'effectuer une commande de phase rapide. Pour cela, un déphaseur hyperfréquence est associé à chaque élément d'antenne. Ces déphaseurs présentent l'inconvénient de consommer beaucoup de courant et d'être encombrant.

Le document "Voltage-Controlled Optical/RF Phase Shifter" de R.A. SOREF publié dans Journal of Lightwave Technology, vol. LT-3, n° 5, Octobre 1985 émet des idées de bases de commande optique d'une antenne à balayage par création de déphasages optiques.

L'invention concerne un dispositif de commande optique des éléments d'antenne permettant d'éviter l'utilisation de déphaseurs hyperfréquences et de nature différente du document précédent.

L'invention concerne donc un dispositif de commande optique d'une antenne à balayage comprenant :

- un réseau d'éléments (E1,...,EN) d'antenne (A), les différents éléments étant arrangés selon un ordre déterminé et commandés chacun par un générateur hyperfréquence (G1,...,GN);
- une source lumineuse (SL);
- des moyens de transmission optique;
- des photodétecteurs (P1,...,PN) fournissant aux générateurs hyperfréquences un signal dont la fréquence traduit le battement dû à deux fréquences lumineuses ($W_0$,$W_1$), caractérisé en ce que
- la source lumineuse (SL) émet simultanément les deux fréquences lumineuses différentes ($W_0$,$W_1$) selon au moins deux faisceaux colinéaires,

- les moyens de transmission optiques comportent autant de modulateurs spaciaux (M1,...,MN ou M'1,...,M'N) qu'il y a de générateurs hyperfréquences (G1,...,GN), chaque modulateur recevant les 2 faisceaux provenant de la source lumineuse (SL) et les retransmettant vers un des photodétecteurs (P1,...PN) déterminant ainsi autant de chemins optiques (C1,...CN) qu'il y a de générateurs hyperfréquences (G1,...GN), ces chemins optiques étant arrangés selon le même ordre déterminé que celui des éléments d'antenne (E1,...,EN), chaque chemin optique ayant une entrée recevant les deux faisceaux émis par la source lumineuse et les retransmettant à une sortie, et chaque chemin optique de rang déterminé (C2 par exemple) ayant une longueur supérieure à celle du chemin optique de rang inférieur (C1 selon l'exemple pris);
- chaque photodétecteur (P1,...,PN) est couplé optiquement à la sortie d'un des chemins optiques, détectant l'intensité lumineuse provenant de cette sortie et fournissant à un des générateurs hyperfréquences (G1 à GN) un signal de commande d'intensité dont la fréquence traduit le battement dû aux deux fréquences des deux faisceaux émis par la source lumineuse (SL).

Les différents objets et caractéristiques de l'invention apparaîtront plus clairement dans les description qui va suivre faite en se reportant aux figures annexées qui représentent :

- la figure 1, une représentation simplifiée d'une antenne à balayage électronique selon l'art connu ;
- la figure 2, un diagramme de fonctionnement d'une antenne à balayage électronique selon l'art connu ;
- la figure 3, un dispositif de commande optique, selon l'invention, d'une antenne à balayage électronique ;
- la figure 4, un dispositif de commande optique plus complet d'une antenne à balayage électronique ;
- la figure 5, un exemple de réalisation d'un modulateur utilisé dans un dispositif de commande optique selon l'invention ;
- la figure 6, une variante de réalisation d'un dispositif de commande optique, selon l'invention, d'une antenne à balayage électronique ;
- la figure 7, une autre variante de réalisation d'un dispositif de commande optique, selon l'invention, d'une antenne à balayage électronique.
- la figure 8, une variante de réalisation du dispositif de commande optique de la figure 3 applicable également aux autres exemples de réalisation.

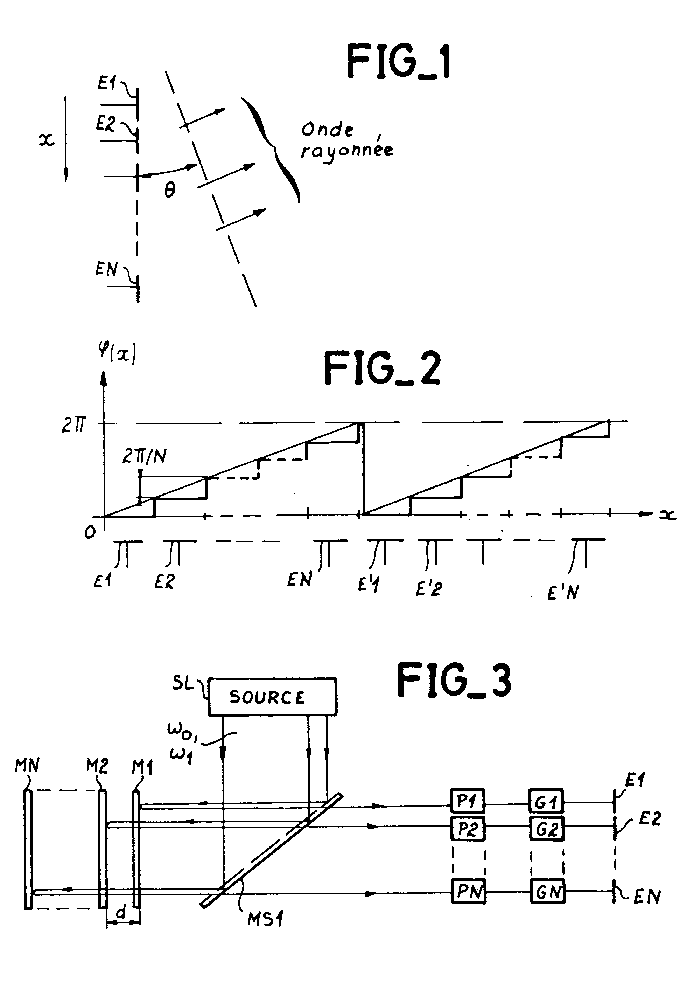

En se reportant aux figures 1 et 2, on va tout d'abord décrire de façon générale un dispositif de commande d'une antenne à balayage électronique.

La figure 1 représente unréseau linéaire d'éléments E1 à EN d'antennes dont le lobe principal d'émission est dirigé dans une direction telle que le plan d'onde rayonnée fait un angle $\theta$ avec le plan du réseau d'antenne. Ce diagramme de rayonnement résulte d'une commande individuelle de chaque élément de l'antenne par une loi linéaire de phase :

$$\phi\,(x) = \tfrac{2\pi}{\lambda} \times \chi \times \theta$$

Dans cette formule on a :
$\lambda$ = longueur d'onde émise,
$\theta$ = angle que fait le plan d'onde rayonnée avec le plan du réseau d'éléments d'antennes,
$\chi$ = longueur d'une partie du réseau d'antenne pour laquelle on obtient un déphasage de 2 π radians.

En pratique, l'émission du faisceau autour d'une direction sera obtenue en limitant l'excursion de phase à l'intervalle 0-2π et en commandant chaque antenne élémentaire par des incréments d'amplitude 2π/N, N étant le nombre de niveaux de quantification de la loi de phase. Comme cela est représenté en figure 2, pour une série d'éléments E1 à EN on obtient une loi de commande de phase dans laquelle la commande de chaque élément est déphasée de 2π/N par rapport aux éléments voisins. Il en est de même pour une autre série d'éléments E'1 à E'N.

Ces techniques d'adressage basées sur une fonction d'échantillonnage de la distribution spatiale de la phase permettent donc le contrôle du diagramme de rayonnement du réseau d'antennes et assurent en particulier les fonctions de déflexion et/ou de focalisation du faisceau. Ces principes nécessitent donc la mise en oeuvre de réseaux de déphaseurs hyperfréquences induisant par exemple, pour N = 4, les déphasages 0 ; π/4 ; 3π/4 ; 2 π.

Ces réseaux de déphaseurs hyperfréquences sont encombrants, coûteux et nécessitent une forte consommation de courant électrique.

C'est pourquoi l'invention concerne un dispositif de commande de phase à faisceaux optiques permettant d'éviter les inconvénients des systèmes connus.

La figure 3 représente un exemple de réalisation du dispositif selon l'invention. Ce dispositif comporte :
- une source laser SL émettant simultanément deux faisceaux colinéaires à fréquence $\omega_0$ et

$$\omega_1 = \omega_0 + \Delta\omega.$$
- un ensemble de N modulateurs spatiaux M1, M2,...MN) parallèles entre eux et distants les uns des autres d'une distance d. Chaque modulateur spatial est constitué de n × n cellules dont la réflectivité peut être commandée par l'intermédiaire de tensions $V_x$ $V_y$ appliquées sur des électrodes de lignes et colonnes ;
- un miroir semi-réfléchissant MS1 permet de réfléchir les deux faisceaux émis par la source laser vers les modulateurs ;
- un réseau de n × n photodétecteurs recevant, par l'intermédiaire du miroir semi-réfléchissant MS, les signaux optiques à fréquences $\omega_0$, $\omega_1$ ayant subi respectivement les déphasages $\phi_0$ et $\phi_1$ tels que :

$$\varphi_0 = \frac{\omega_0}{c}\,2\,d\,(N-1)$$

$$\varphi_1 = \frac{\omega_1}{c}\,2\,d\,(N-1)$$

Dans ces formules, c représente la vitesse de la lumière, d représente la distance entre deux modulateurs et N le nombre de modulateurs.
- un réseau de n × n générateurs hyperfréquences commandés par le signal issu de chaque photodétecteur. En particulier la phase du signal de battement entre les deux faisceaux à fréquence $\omega_0$ et $\omega_1$ servira de pilote aux phases relatives entrte les n × n éléments de l'antenne.

Comme cela est représenté sur la figure 3, chaque modulateur M1 à MN réfléchit une partie des faisceaux reçus de la source SL vers un photodétecteur P1 à PN, tandis qu'il laisse passer vers le modulateur suivant le reste des faisceaux. Par exemple, le modulateur M1 réfléchit une partie des faisceaux et transmet le reste de la lumière vers les modulateurs M2 à MN. Les photodétecteurs P1 à PN reçoivent des faisceaux lumineux ayant subi des déphasages plus ou moins importants dus à la distance parcourue par les faisceaux lumineux selon le modulateur qui a réfléchi la lumière.

Le signal reçu par chaque photodétecteur dû au battement des ondes à fréquences $\omega_0$ et $\omega_1$ s'écrit :

$$\xi = \xi_0\left[e^{j\omega_0(t-z/c)} + e^{j\omega_1(t-z/c)}\right]$$

Dans cette formule on a :
t = temps à un instant donné,
z = distance parcourue par la lumière à l'instant t.

c = vitesse de la lumière.

Le photocourant détecté iph résultant de ce battement d'ondes est proportionnel au carré de ξ

$$iph \; \alpha \; \parallel \xi \parallel^2$$

Le photocourant iph est donc proportionnel à :

$$iph \; \alpha \; I \; + \; \cos [ \Delta \omega . t - \Delta \omega . \frac{z}{c} ]$$

La phase φ du signal hyperfréquence à fréquence Δ ω est donc fonction de la distance parcourue par les faisceaux issus de la source SL est donc déterminé par la distance d entre modulateurs spatiaux :

$$\phi = 2\pi \Delta \omega z/c$$

Si on choisit, comme représenté sur la figure 2, N niveaux de phase, la distance d entre modulateurs spatiaux M1 à MN conduisant à un incrémant de 2π/N, vaut :

$$d \; = \; \frac{c}{2\pi\Delta\omega}$$

Selon le schéma de principe de la figure 3, le déphasage φ entre l'onde ayant subi une réflexion sur le modulateur spatial M1 ( φ = 0, référence de phase) et l'onde réfléchie par un point quelconque d'un modulateur spatial P s'écrit :

$$\phi_P = p \frac{2\pi}{N}$$

p étant le numéro d'ordre du modulateur spatial P.

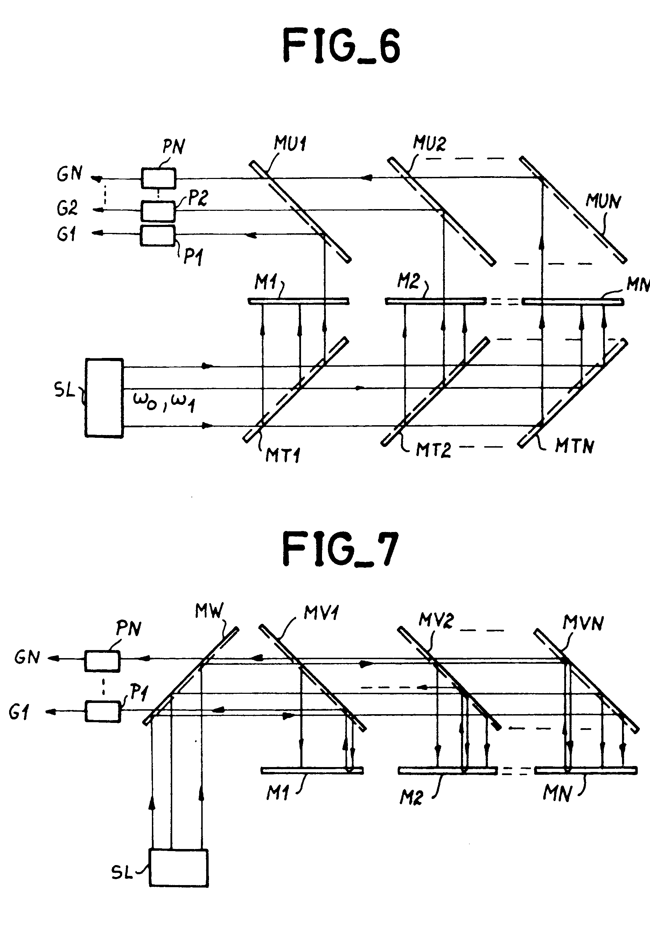

Un exemple de réalisation d'un modulateur spatial a été représenté en figure 5. Il comporte une matrice d'éléments commandés par des électrodes de lignes et de colonnes. Dans cette matrice à n lignes et m colonnes, un seul point de croisement est commandé pour réfléchir la lumière. Les autres points de croisement sont commandés pour la transmettre.

Le modulateur spatial assure donc une réflexion contrôlée de l'onde incidente en un seul point de coordonnées X-Y sous l'action de tensions appliquées $V_X$ et $V_Y$. Le nombre de points m × n correspond au nombre d'éléments de l'antenne soit :

$$m \cdot n \; \simeq \; \frac{3 \; S}{\lambda^2}$$

dans le cas où la distance entre éléments est de l'ordre de 0,6 λ :

S : surface de l'antenne

λ : longueur d'onde d'émission.

On peut également prévoir d'avoir un nombre n de lignes égal au nombre de colonnes. On a alors :

$$n^2 \; = \; \frac{3 \; S}{\lambda^2}$$

La réalisation des modulateurs spatiaux peut faire appel à divers effets physiques.

Les effets physiques utilisables pour la réalisation d'une telle fonction sont les suivants :

- variation d'indice dans les cristaux liquides conduisant à une variation de réflectivité de l'interface substrat cristal liquide ( $\Delta n \simeq 0,2$).
- électroréflectance dans les matériaux semiconducteurs et en particuliers dans les structures à multi-puits quantiques.

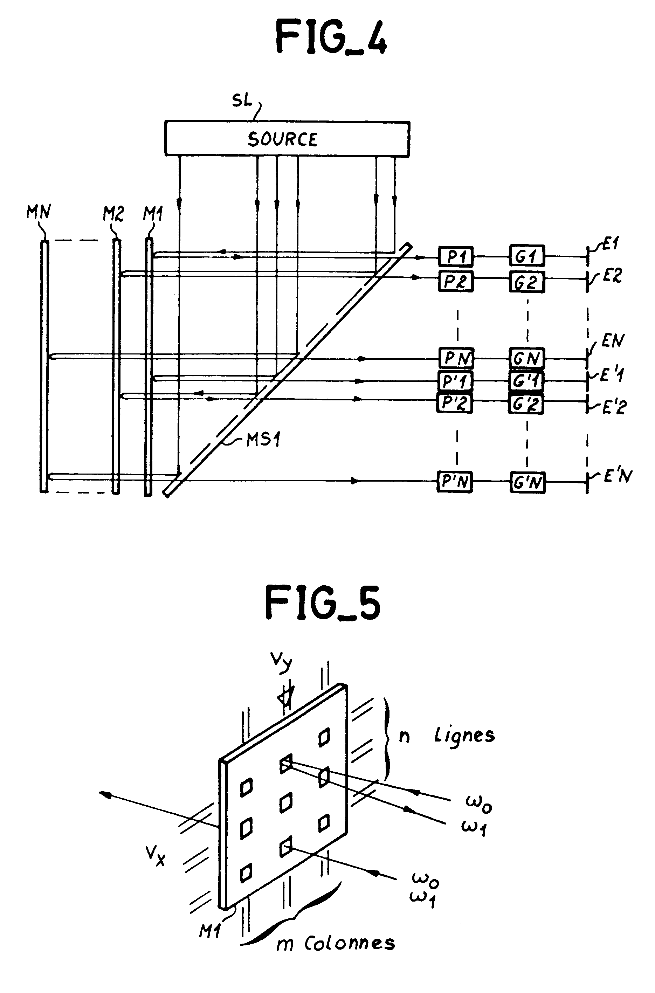

On peut également prévoir plusieurs groupes d'éléments d'antenne commandé chacun sur un déphasage de 2π. Sur la figure 4 par exemple, on a représenté deux groupes d'éléments d'antenne E1 à EN et E'1 à E'N commandés par deux groupes de photodétecteurs P1 à PN et P'1 à P'N chaque groupe étant commandé par un même ensemble de modulateurs spatiaux M1 à MN.

En se reportant à la figure 6, on va maintenant décrire une variante de réalisation du dispositif de l'invention.

Dans cette configuration, tous les modulateurs spatiaux M1, M2 à MN sont éclairés simultanément par transmission à partir de lames semi-transparentes MT1, MT2, ... MTN et d'une source laser unique émettant sur les deux fréquences $\omega_0$ et $\omega_1$. Les lames semi-transparentes sont parallèles alignées selon la direction des faisceaux émis par la source SL. A chaque modulation M1 à MN est associé une lame semi-transparente MT 1 à MTN.

Le modulateur spatial fonctionne par variation locale de transmission, contrôlée sous l'action de tensions appliquées $V_X$ et $V_Y$. Un certain nombre de ces dispositifs existent à partir des effets suivants :

- biréfringence induite dans les cristaux liquides nématiques adressés par TFT,
- diffusion contrôlée dans les cristaux liquides smectiques,
- déformation locale de membrane,
- biréfringence induite par effet magnéto-optique.

Suivant les dispositifs utilisés les temps de commutation d'un point élémentaire varient de $\tau$ = 10 ns (magnéto-optique, semi-conducteur...) à $\tau$ = 10 ms (cristaux liquides).

A chaque modulateur spatial M1 à MN est associé un autre miroir semi-transparent MU1 à MUN situé de l'autre côté du modulateur spatial par rapport aux miroirs semi-transparents MT1 à MTN. Les miroirs semi-transparents MU1 à MUN sont parallèles et alignés selon une même direction de façon à renvoyer la lumière vers les photodétecteurs P1 à PN dont les sorties sont connectées aux générateurs hyperfréquences G1 à GN non représentés.

La commande des modulateurs M1 à MN est telle que chaque modulateur transmet une partie des faisceaux lumineux, émis par la source, vers un seul photodétecteur.

Les photodétecteurs P1 à PN reçoivent des faisceaux lumineux ayant parcourus des chemins différents, la longueur des trajets augmentant avec les numéros d'ordre 1 à N des photodétecteurs P1 à PN. Les différences de trajets et de ce fait les positions respectives des modulateurs sont prévus pour obtenir, entre deux modulateurs voisins, un déphasage de $2\pi/N$ soit un déphasage de $2\pi$ entre le modulateur M1 et le modulateur MN.

En se reportant à la figure 7, on voit que selon une autre variante de réalisation de l'invention, le système de la figure 6 est également applicable en utilisant des modulateurs fonctionnant en réflexion.

Les modulateurs M1, M2, ... MN sont alignés dans un même plan selon une même direction. La source lumineuse SL émet les deux faisceaux lumineux colinéaires de fréquences $\omega_0$ et $\omega_1$ vers un miroir semi-réfléchissant MW. Celui-ci retransmet les deux faisceaux selon une direction parallèle à la direction d'alignement des modulateurs M1 à MN. A chaque modulateur M1 à MN est associé un miroir semi-réfléchissant MV1 à MVN. Les miroirs MV1 à MVN sont alignés selon la direction des faisceaux et chacun d'eux réfléchit une partie des faisceaux lumineux vers le modulateur associé. Chaque modulateur est commandé de façon qu'une seule de ces zones (ou partie de sa surface) réfléchisse une partie des faisceaux vers le miroir associé. Le miroir associé réfléchit cette partie de faisceau vers un photodétecteur P1, ... PN, à travers le miroir semi-réfléchissant MW. C'est ainsi que le modulateur M1 réfléchit une partie des faisceaux de fréquences $\omega_0$ vers le photodétecteur P1 et le modulateur MN en réfléchit une autre partie vers le photodétecteur PN.

Pour des fréquences inférieures à 4 GHz (bande S), les deux ondes $\omega_0$ et $\omega_1$ sont facilement générées à partir d'une cellule acousto-optique commandée par un signal hyperfréquence. $\Delta\omega = \omega_1 - \omega_0$. L'absorption ultrasonore limite l'emploi de ces cellules pour les fréquences plus élevées (4 à 12 GHz). Dans ce domaine, on peut obtenir l'écart de fréquence souhaité par :
- association de cellules de Bragg,
- battement entre deux modes d'une même cavité laser (laser gaz ; laser semiconducteur),
- battement entre deux lasers monofréquences indépendants présentant un écart de fréquence égal à $\Delta\omega$ (Lasers semiconducteurs).

Une amélioration intéressante au dispositif consiste à utiliser un réseau de $n_2$ fibres optiques monomodes de même longueur pour la transmission du signal vers le réseau de photodétecteurs. Ces fibres rendent la partie émission de l'antenne indépendante du processeur optique assurant le contrôle des déphasages.

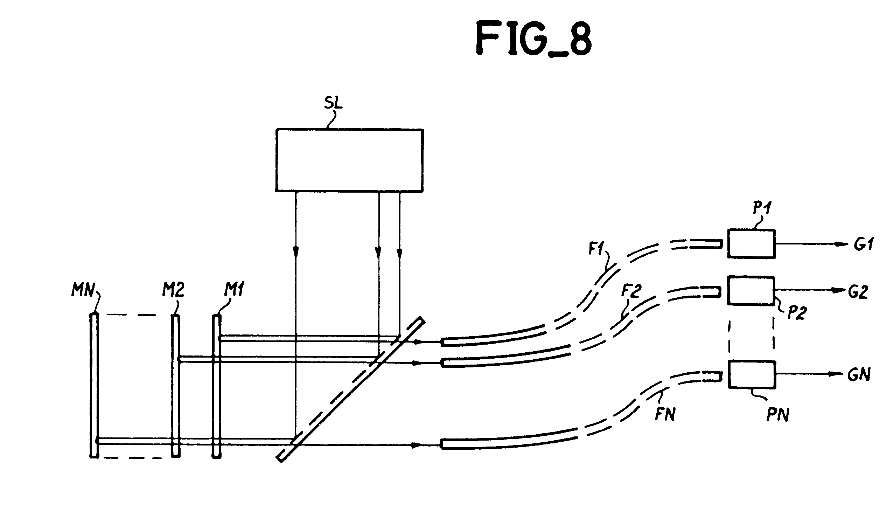

En appliquant cette disposition au système de la figure 3, on obtient un système tel que représenté en figure 8 dans lequel les différentes parties de faisceaux lumineux réfléchies par les modulateurs M1, M2, ...MN sont retransmises par des fibres F1, F2,...FN aux photodétecteurs P1, P2,...PN. Compte tenu de la description qui précède, les différentes fibres F1, F2, ...FN doivent avoir la même longueur à moins que l'on désire qu'elles introduisent des déphasages, dans lequel cas on les prévoiera de longueurs différentes.

A titre d'exemple non limitatif, on va maintenant donner un exemple numérique de réalisation permettant d'illustrer l'invention.

On dispose d'une antenne de surface S = 10 m2. La fréquence de détection doit être $\Delta f$ = 5 GHz soit une longueur d'onde émise par l'antenne de $\lambda$ - 6 cm.

Le nombre d'éléments de l'antenne, pour un espacement des éléments égal à 0,6 $\lambda$, est :

$$n^2 = 3\,S\,\lambda^{-2}$$

Dans l'exemple de réalisation de la figure 3, si on prend quatre niveaux de phase (N = 4), la distance d entre modulateurs spatiaux est :

$$d = \frac{k\lambda}{2} + \frac{C}{2N\Delta F}$$

$$d\ (cm) = \frac{k\lambda}{2} + 0.75$$

La puissance optique à la réception pour la détection de battements entre les deux ondes lumineuses à fréquence

$\omega_0$ et $\omega_1$ tel que : $\Delta\omega = \omega_1 - \omega_0$ = 5 GHz

et pour un rapport signal/bruit = S/B = 30 dB a pour valeur : $\rho_0$ = 10 $\mu$w.

La puissance laser émise sur les fréquences $\omega_0$ et $\omega_1$ doit être :

$$P_L = n^2 P_0$$

soit : $P_L$ = 100 mW

Pour obtenir la différence de fréquence, on utilise donc un translateur de fréquence ayant deux cellules de Bragg en $LiNbO_3$ fonctionnant à 2,5 GHz.

Les modulateurs spatiaux seront chacun sous forme d'une matrice de points avec un nombre de point égal à 100 × 100. La dimension de chaque point pourra être de 30 × 30 $\mu$m.

Le dispositif de commande de balayage d'une antenne ainsi décrit présente les avantages suivants :

- Contrôle de la phase du signal hyperfréquence par retards optiques programmables sur des modulateurs spatiaux. Le dispositif évite donc l'emploi de déphaseurs hyperfréquences et de leurs systèmes d'alimentation.
- Les modulateurs spatiaux éclairés par la source laser peuvent être remplacés par des réseaux bidimensionnels de lasers semiconducteurs.
- Il est possible de faire varier les fréquences $\omega_o$ et $\omega_l$ du faisceau incident (agilité de fréquence).

**Revendications**

1. Dispositif de commande optique d'une antenne à balayage comprenant:
   - un réseau d'éléments (E1,...,EN) d'antenne (A), les différents éléments étant arrangés selon un ordre déterminé et commandés chacun par un générateur hyperfréquence (G1,...,GN);
   - une source lumineuse (SL);
   - des moyens de transmission optique;
   - des photodétecteurs (P1,...,PN) fournissant aux générateurs hyperfréquences un signal dont la fréquence traduit le battement dû à deux fréquences lumineuses $(\omega_0,\omega_1)$, caractérisé en ce que
   - la source lumineuse (SL) émet simultanément les deux fréquences lumineuses différentes $(\omega_0,\omega_1)$ selon au moins deux faisceaux colinéaires,
   - les moyens de transmission optiques comportent autant de modulateurs spatiaux (M1,...,MN ou M'1,...,M'N) qu'il y a de générateurs hyperfréquences (G1,...,GN), chaque modulateur recevant les 2 faisceaux provenant de la source lumineuse (SL) et les retransmettant vers un des photodétecteurs (P1,...PN) déterminant ainsi autant de chemins optiques (C1,...CN) qu'il y a de générateurs hyperfréquences (G1,...GN), ces chemins optiques étant arrangés selon le même ordre déterminé que celui des éléments d'antenne (E1,...,EN), chaque chemin optique ayant une entrée recevant les deux faisceaux émis par la source lumineuse et les retransmettant à une sortie, et chaque chemin optique de rang déterminé (C2 par exemple) ayant une longueur supérieure à celle du chemin optique de rang inférieur (C1 selon l'exemple pris);
   - chaque photodétecteur (P1,...,PN) est couplé optiquement à la sortie d'un des chemins optiques, détectant l'intensité lumineuse provenant de cette sortie et fournissant à un des générateurs hyperfréquences (G1 à GN) un signal de commande d'intensité dont la fréquence traduit le battement dû aux deux fréquences des deux faisceaux émis par la source lumineuse (SL).

2. Dispositif de commande selon la revendication 1, caractérisé en ce que les modulateurs spatiaux (M1,...,MN) sont à réflectivité contrôlée, chaque modulateur (M1,...MN) réfléchissant les deux faisceaux vers un photodétecteur (P1,...PN).

3. Dispositif de commande selon la revendication 2, caractérisé en ce que les distances séparant les différents modulateurs (M1,...MN) de la source lumineuse (SL) étant différentes.

4. Dispositif de commande selon la revendication 2, caractérisé en ce qu'il comporte un miroir semi-réfléchissant (MS1) recevant, d'une part, les deux faisceaux lumineux provenant de la source lumineuse (SL) et les retransmettant aux modulateurs et, d'autre part, les faisceaux réfléchis par les modulateurs et les retransmettant aux photodétecteurs.

5. Dispositif de commande selon la revendication 2, caractérisé en ce que les modulateurs sont des modulateurs de forme plane disposés parallèlement.

6. Dispositif de commande selon la revendication 2, caractérisé en ce que chaque modulateur comporte une cellule à cristal liquide.

7. Dispositif de commande selon la revendication 2, caractérisé en ce que chaque modulateur est un dispositif à biréfringence induite par effet magnéto-optique.

8. Dispositif de commande selon la revendication 2, caractérisé en ce que chaque modulateur est un dispositif en matériaux semiconducteurs dont les propriétés de réflexion sont commandés électriquement.

9. Dispositif de commande selon la revendication 1, caractérisé en ce que les moyens de transmission comportent pour chaque chemin optique (C1,...CN) une fibre optique (F1,...FN).

10. Dispositif de commande selon la revendication 1, caractérisé en ce que les modulateurs spatiaux (M'1,...,M'N) sont à transmission contrôlée, chaque modulateur (M'1,...,M'N) recevant les deux faisceaux provenant de la source lumineuse et les retransmettant vers un photodétecteur (P1,...,PN).

11. Dispositif de commande selon la revendication 10, caractérisé en ce que les différents modulateurs sont disposés selon une direction, la source lumineuse (SL) émettant lesdits faisceaux lumineux parallèlement à cette direction, les moyens de transmission comportant en outre une première série de miroirs semi-réfléchissants (MT1,...MTN) disposés selon la direction desdits faisceaux lumineux, chaque miroir (MT1,...MTN) étant associé à un modulateur de façon à lui transmettre une partie des deux faisceaux lumineux.

12. Dispositif selon la revendication 11, caractérisé en ce que les moyens de transmission comportent une deuxième série de miroirs semi-réfléchissants (MU1,...MUN) associés chacun à un modulateur, disposés selon une direction parallèle auxdites directions précédentes, et réfléchissant les faisceaux lumineux traversant chaque modulateur vers un photodétecteur.

13. Dispositif de commande selon la revendication 2, caractérisé en ce que les modulateurs sont disposés selon une direction, la source lumineuse (SL), émettant lesdits faisceaux lumineux parallèlement à cette direction, les moyens de transmission comportant une série de miroirs semi-réfléchissants (MV1,...MVN) disposés selon la direction desdits faisceaux lumineux, chaque miroir (MV1,...MVN) étant associé à un modulateur de façon à lui transmettre perpendiculalrement une partie des deux faisceaux lumineux.

**Claims**

1. A device for the optical control of a scanning antenna comprising:
   - an array of antenna (A) elements (E1,...,EN), the different elements being arranged in predetermined order and each being operated by an ultrahigh frequency generator (G1,...,GN);
   - a source of light (SL);
   - optical transmission means;
   - photodetectors (P1,...,PN) providing the ultra high frequency generators with a signal whose frequency translates the beat due to two light frequencies ($\omega_0$ and $\omega_1$)
   characterized in that
   - the source (SL) of light simultaneously emits the two different light frequencies ($\omega_0$ and $\omega_1$) in at least two collinear beams,
   - the optical transmission means comprise as many spatial modulators (M1,...,MN or M'1,...,M'N) as there are ultrahigh frequency generators (G1,...,GN), each modulator receiving the 2 beams from the light source (SL) and retransmitting them back to one of the photodetectors (P1,...,PN) thus defining as many optical paths (C1,...,CM) as there are ultrahigh frequency generators (G1,...,GN), said optical paths being arranged in the same predetermined order as that of the antenna elements (E1,...,EN), each optical path having an input receiving the two beams emitted by the light source and retransmitting them to an output, and each optical path of a given rank (as for instance C2) having a length greater than that of the optical path with an inferior rank (C1 in the given example);
   - each photodetector (P1,...,PN) is coupled optically with the output of one of the optical paths, detecting the light intensity from this output and providing one of the ultrahigh frequency generators (G1 through GN) with an intensity control signal whose frequency translates the beat due to the two frequencies of the two beams emitted by the light source (SL).

2. The control device as claimed in claim 1, characterized in that the spatial modulators (M1,...,MN) have a controlled reflectivity, each modulator reflecting the two beams to one photoconductor (P1,...,PN).

3. The control device as claimed in claim 2, characterized in that the distances separating the different modulators (M1,..,MN) from the light source (SL) are different.

4. The control device as claimed in claim 2, characterized in that it comprises a semireflecting mirror (MS1) receiving on the one hand the two light beams from the light source (SL) and retransmitting them to the modulators and on the other hand the beams reflected by the modulators and retransmitting them to the photodectectors.

5. The control device as claimed in claim 2, characterized in that the modulators are modulators with a flat form and arranged in parallelism.

6. The control device as claimed in claim 2, characterized in that each modulator comprises a liquid crystal cell.

7. The control device as claimed in claim 2, characterized in that each modulator is a device using birefrigence induced by a magneto-optical effect.

8. The control device as claimed in claim 2, characterized in that each modulator is a device of semiconducting materials whose reflection properties are electrically controlled.

9. The control device as claimed in claim 1, characterized in that the transmission means comprise an optical fiber (F1,...,FN) for each optical path (C1,...,CN).

10. The control device as claimed in claim 1, characterized in that the spatial modulators (M'1,...,M'N) have a controlled transmission, each modulator (M'1,...,M'N) receiving the two beams from the light source and retransmitting them to a photodetector (P1,...,PN).

11. The control device as claimed in claim 10, characterized in that the different modulators are arranged in one direction, the light source (SL) emitting the said beams in parallelism to this direction, the transmission means comprising furthermore a first series of semi-reflecting mirrors (MT1,...,MTN) arranged in the direction of the said light beams, each mirror (MT1,...,MTN) being associated with a modulator, in such a manner as to transmit to it a part of the trio light beams.

12. The control device as claimed in claim 11, characterized in that the transmission means comprise a second series of semi-reflecting mirrors (MU1,...,MUN) each associated with one modulator, arranged in a direction parallel to the said preceding directions and reflecting the light beams passing through each modulator to a photodetector.

13. The control device as claimed in claim 2, characterized in that the modulators are arranged in a single direction, the light source (SL) emitting the said light beams in parallelism to this direction, the transmission means comprising a series of semi-reflecting mirrors (MV1, ...,MVN) arranged in the direction of the light beams, each mirror (MV1, ...,MVN) being associated with a modulator in such a manner as to transmit a part of the light beams perpendicularly to the same.

**Patentansprüche**

1. Optische Steuereinrichtung für eine Abtastantenne, mit
   - einer Gruppe von Elementen (E1,...,EN) einer Antenne (A), wobei die verschiedenen Elemente in einer bestimmten Reihenfolge angeordnet sind und jeweils von einem Ultrahochfrequenzgenerator (G1,...,GN) gesteuert werden;
   - einer Lichtquelle (SL);
   - optischen Übertragungsmitteln;
   - Photodetektoren (P1,...,PN), die an die Ultrahochfrequenzgeneratoren ein Signal liefern, dessen Frequenz sich aus der Überlagerung zweier Lichtfrequenzen ($\omega_0$, $\omega_1$) ergibt, dadurch gekennzeichnet, daß
   - die Lichtquelle (SL) gleichzeitig die zwei verschiedenen Lichtfrequenzen ($\omega_0$, $\omega_1$) in wenigstens zwei kollinearen Bündeln emittiert,
   - die optischen Übertragungsmittel soviele räumliche Modulatoren (M1,...,MN oder M'1,...,M'N) aufweisen wie Ultrahochfrequenzgeneratoren (G1,...,GN) vorhanden sind, wobei jeder Modulator die beiden von der Lichtquelle (SL) ausgehenden Bündel empfängt und sie zu einem der Photodetektoren (P1,...,PN) überträgt, wodurch soviele optische Wege (C1,...,CN) festgelegt werden wie Ultrahochfrequenzgeneratoren (G1,...,GN) vorhanden sind, wobei diese optischen Wege in der gleichen bestimmten Reihenfolge angeordnet sind wie die Antennenelemente (E1,...,EN), wobei jeder optische weg einen Eingang besitzt, der die beiden von der Lichtquelle emittierten Bündel empfängt und sie an einen Ausgang überträgt und wobei jeder optische weg von bestimmtem Rang (z.B. C2) eine Länge besitzt, die größer als diejenige des optischen Weges von niedrigerem Rang (C1 im gewählten Beispiel) ist;
   - jeder Photodetektor (P1,...,PN) mit dem Ausgang eines optischen Weges optisch gekoppelt ist, die von diesem Ausgang ausgehende Lichtintensität erfaßt und zu einem der Ultrahochfrequenzgeneratoren (G1 bis GN) ein Intensitätssteuersignal liefert, dessen Frequenz sich aus der Überlagerung der zwei Frequenzen der beiden von der Lichtquelle (SL) emittierten Bündel ergibt.

2. Steuereinrichtung gemäß Anspruch 1, dadurch gekennzeichnet, daß die räumlichen Modulatoren (M1,...,MN) eine gesteuerte Reflektivität besitzt, wobei jeder Modulator (M1,...,MN) die beiden Bündel zu einem Photodetektor (P1,...,PN) reflektiert.

3. Steuereinrichtung gemäß Anspruch 2, dadurch gekennzeichnet, daß die Abstände, um die die verschiedenen Modulatoren (M1,...,MN) von der Lichtquelle (SL) entfernt sind, verschieden sind.

4. Steuereinrichtung gemäß Anspruch 2, dadurch gekennzeichnet, daß sie einen halbdurchlässigen Spiegel (MS1) aufweist, der einerseits die von der Lichtquelle (SL) ausgehenden Lichtbündel empfängt und sie zu den Modulatoren überträgt und andererseits die von den Modulatoren reflektierten Bündel empfängt und zu den Photodetektoren überträgt.

5. Steuereinrichtung gemäß Anspruch 2, dadurch gekennzeichnet, daß die Modulatoren parallel angeordnete Modulatoren von ebener Form sind.

6. Steuereinrichtung gemäß Anspruch 2, dadurch gekennzeichnet, daß jeder Modulator eine Flüssigkristallzelle aufweist.

7. Steuereinrichtung gemäß Anspruch 2, dadurch gekennzeichnet, daß jeder Modulator eine Einrichtung mit magnetooptisch bewirkter Doppelbrechung ist.

8. Steuereinrichtung gemäß Anspruch 2, dadurch gekennzeichnet, daß jeder Modulator eine Einrichtung aus Halbleitermaterialien ist, deren Reflexionseigenschaften elektrisch gesteuert werden.

9. Steuereinrichtung gemäß Anspruch 1, dadurch gekennzeichnet, daß die Übertragungsmittel für jeden optischen Weg (C1,...,CN) eine Lichtleitfaser (F1,...,FN) aufweisen.

10. Steuereinrichtung gemäß Anspruch 1, dadurch gekennzeichnet, daß die räumlichen Modulatoren (M'1,...,M'N) mit gesteuerter Übertragung arbeiten, wobei jeder Modulator (M'1,...,M'N) die beiden von der Lichtquelle ausgehenden Bündel empfängt und sie zu einem Photodetektor (P1,...,PN) überträgt.

11. Steuereinrichtung gemäß Anspruch 10, dadurch gekennzeichnet, daß die verschiedenen Modulatoren in einer Richtung angeordnet sind, wobei die Lichtquelle (SL) die Lichtbündel parallel zu dieser Richtung emittiert, wobei die Übertragungsmittel außerdem eine erste Reihe von in Richtung der Lichtbündel angeordneten halbdurchlässigen Spiegeln (MT1,...,MTN) aufweisen, wobei jeder Spiegel (MT1,...,MTN) einem Modulator zugeordnet ist, derart, daß er an diesen einen Teil der zwei Lichtbündel überträgt.

12. Einrichtung gemäß Anspruch 11, dadurch gekennzeichnet, daß die Übertragungsmittel eine zweite Reihe von halbdurchlässigen Spiegeln (MU1,...,MUN) aufweisen, die jeweils einem Modulator zugeordnet sind, in einer zu den vorhergehenden Richtungen parallelen Richtung angeordnet sind und die durch jeden Modulator verlaufenden Lichtbündel zu einem Photodetektor reflektieren.

13. Steuereinrichtung gemäß Anspruch 2, dadurch gekennzeichnet, daß die Modulatoren in einer Richtung angeordnet sind, wobei die Lichtquelle (SL) die erwähnten Lichtbündel parallel zu dieser Richtung emittiert, wobei die Übertragungsmittel eine Reihe von in Richtung der Lichtbündel angeordneten halbdurchlässigen Spiegeln (MV1,...,MVN) aufweist, wobei jeder Spiegel (MV1,...,MVN) einem Modulator derart zugeordnet ist, daß er zu ihm in senkrechter Richtung einen Teil der beiden Lichtbündel überträgt.

# FIG_1

Onde rayonnée

# FIG_2

# FIG_3

# FIG_4

# FIG_5

# FIG_6

# FIG_7

# FIG_8

EP 0 287 444 B1